# EUROPEAN PATENT APPLICATION

(11) **EP 2 094 035 A1**
(43) Date of publication of application: **26.08.2009**
(21) Application number: 09000484.7
(22) Date of filing: 15.01.2009
(51) Int. Cl.: H04W 4/12

(54) **System for managing and transmitting digital information through messaging**

(30) Priority: 19.02.2008 IT TO20080126
(71) Applicant: Sertea S.r.l., 24044 Dalmine (BG) (IT)
(72) Inventor: Manenti, Roberto, 24044 Dalmine (BG) (IT)
(74) Representative: Garavelli, Paolo

(57) **Abstract**

A system is described for managing and transmitting digital information by means of a messaging service, that sends a prepared and organised message, as result of a processing of pieces of information collected from different databases according to prefixed criteria; the system is contained on a user computer or a server (7, 8, 14) connected to a network (3); the system comprises a procedure for selecting specific pieces of information that associates specific addresses to which a message must be sent, and comprises a protocol that manages the sale of advertising messages, dividing a coverage area of the network (3) into geographic communication environments selected by at least one user of the network (3) and independent from the user position, in order to send to the user a set of information comprising advertising messages that depend on the geographic communication environments.

## Description

A system for managing and transmitting digital information by means of dedicated mobile centres - for example cellular systems connected to computer systems - that are able to:
- verify the identity of a user of a network;
- manage information about customers or subscribers to a network, both of the private and of the public type;
- manage network information;
in order to send carefully prepared and organised messages by means of a SMS (Short Message Service) type of messaging system.

The prior art disclosed in document EP-A1-1073243 deals with the use of a SMS-type messaging system connected to a particular service or entertainment platform. In order to inform mobile telephone users about certain Internet addresses, a protocol is used that is managed by a computer belonging to the network. This protocol allows transferring to the SMS messages managing centre all necessary information to unscramble a certain Internet address associated with this entertainment platform.

A specific protocol equipped with particular algorithms transforms a piece of information into a string of commands able to identify a certain entertainment platform being present on the network.

A system of the above-described type does not take into account some peculiarities dealing with: the collection of information coming from different databases; the transmission of prepared and processed messages to and from a network that uses mobile telephones to communicate; the transmission of reserved information for a network customer according to a planned connection procedure; the degree of privacy protection for the user himself and his addresses.

From documents EP-A-1363430, EP-A-1073243 e WO-A2-01/52558 a system is also known, that is according to the preamble of Claim 1: such system however only allows the transmission of messages to users according to their geographical position and according to time information, but not according to a geographic location chosen by the user.

The main object of the invention disclosed in the present document is providing a system for managing and transmitting digital information aimed to well defined geographic areas, chosen by the user upon his login, independently from where the user is or is moving.

The above and other objects and advantages of the invention, as will appear from the following description, are obtained by a messaging system as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Fig. 1 shows a network in which the communication system is connected to a SMS-type messaging service centre;
- Fig. 2 shows a telephone/Internet connection that allows transferring information dealing with an Internet platform;
- Fig. 3 shows a card related to information treated within the network;
- Fig. 4 shows an example of managing a piece of information deriving from a combination of data taken from different databases made available to the network and the related messaging service connected to the network; and
- Fig. 5 shows an example dealing with managing information with reference to the main tasks of a bank as regards its customers and the exchange values of listed securities.

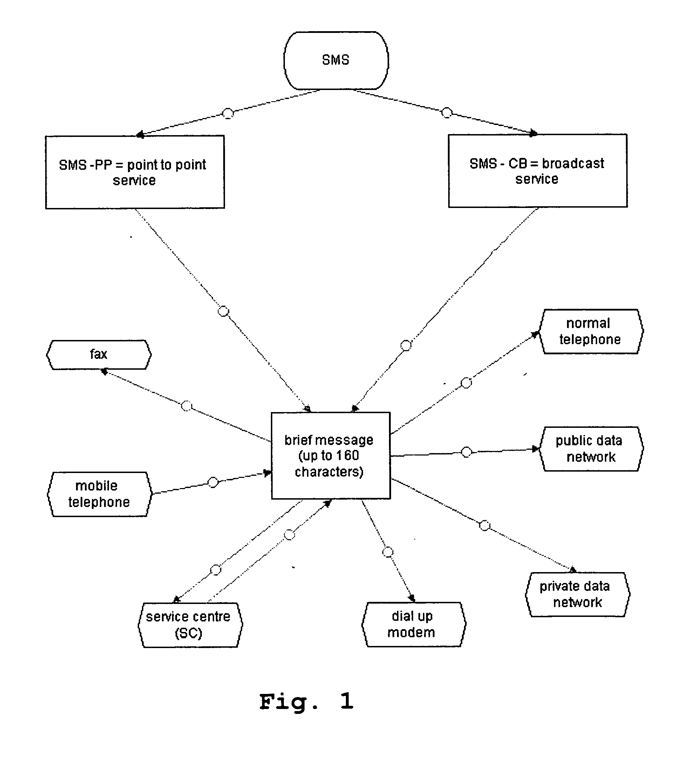

With reference to the Figures, a service among individual users or a service within a broadcast based on a SMS-type messaging system allows transmitting messages (up to 160 characters long) putting in communication, and therefore being able to manage: a modem, a fax, a mobile telephone, a Service Centre (SC), a public or private network, a normal telephone (Fig. 1).

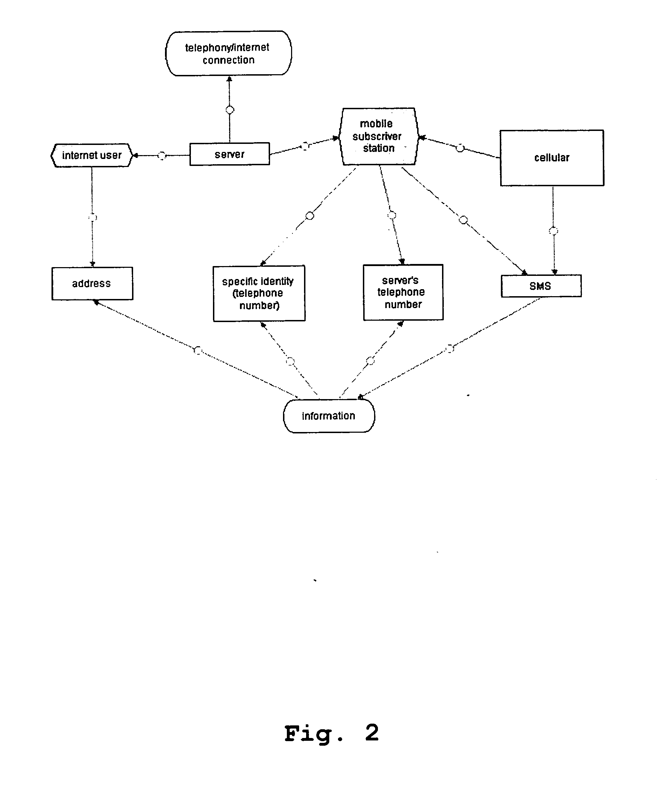

A piece of information is able to identify: an Internet address, a telephone number, a server telephone number, establishing a connection between (fixed and mobile) telephone network and Internet network (Fig. 2).

A network 3, defined as group of users or subscribers connected for exchanging information by means of a prefixed communication service, uses a computer and a server 7,8 to manage different databases, each database containing information and data that are the object of an exchange of information among the subscribers of the network itself. For example; a database 7 contains a list of information dealing with a set of generic news such as: name, surname, address, place and date of birth, etc., associated with a set of specific news like: hobbies, cultural subjects, nationality, etc. On the same trace a database 8 contains dates of particular general-purpose events such as holidays, Christmas or Easter holidays, etc.

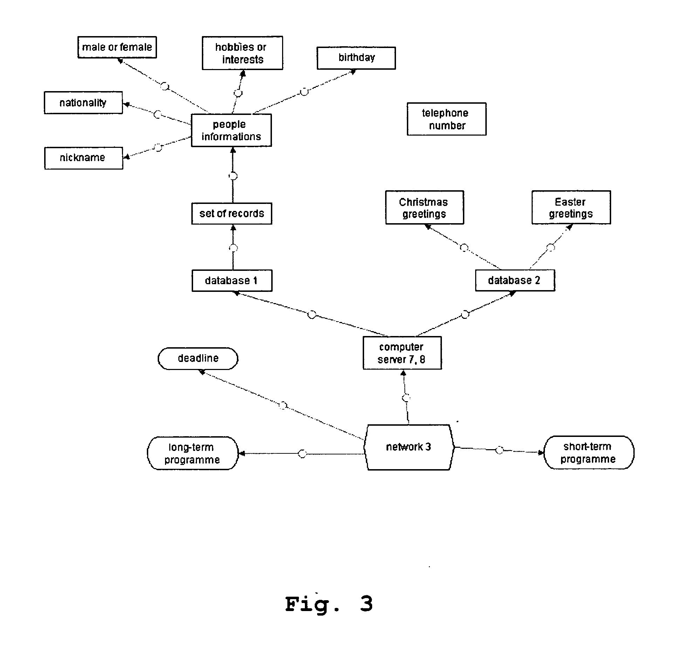

Computer and server 7, 8, by means of a managing system residing on external operator server, or through a managing system residing on the user PC, manage a time planning program dealing with the date on which specific information have to be sent by means of a SMS-type messaging system as regards users or subscribers belonging to the network. A selection procedure of specific pieces of information contained in the above-mentioned databases associates specific addresses to which a message has to be sent (Fig. 3).

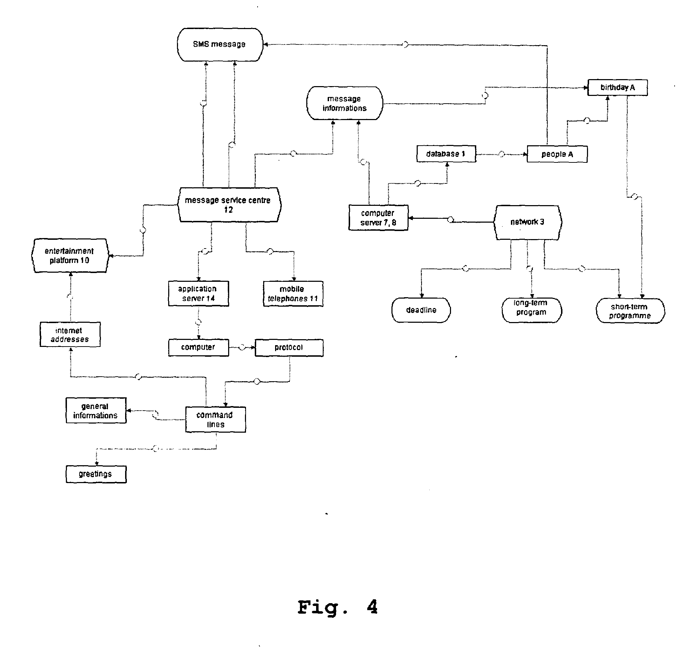

A first example deals with:
- the selection associating specific events such as Christmas and Easter with users of a company;
- the automatic shipment of greetings messages;
by means of a messaging service of the SMS type according to a short- or long-term time programming. A similar example to the above-mentioned one deals with the name selection of specific network users associating their respective date of birth to the day in which the greetings message has to be sent (Fig. 4).

A computer 7, by means of a server 8, sends the selected information (person A, date of birth associated with this person A, message transmission expiry time) to a SMS-type Messaging Service Centre (MSC) 12.

The Messaging Service Centre (MSC) 12 comprises a server 14 and a computer equipped with a specific protocol able to manage and translate these personal information in the form of command lines. These command lines contain the combination of these information about general network personnel data with specific information such as greetings sentences, Internet entertainment platform addresses, etc.

A particular Internet address deals with a specific entertainment platform 10 that allows displaying specific entertainment areas in agreement with the subject of the message/information to be addressed to network personnel.

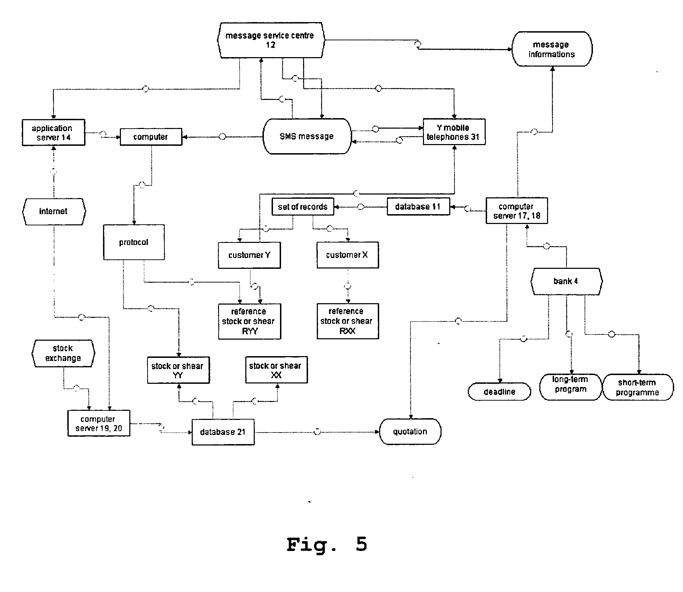

A second example deals with the selection and transmission of information by a bank 4, according to a predefined time planning, as regards customers that subscribed listed securities. Also in this case reference is made to the SMS-type messaging system (Fig. 5).

A database 11 contains:
- a set of information dealing with general data about bank or Intermediate Company customers;
- the list of listed securities associated with respective customers;
- the value of each listed security, this value being included starting from a specific date programmed by means of a computer and a server 17, 18.

A messaging service centre 12 receives these pieces of information by the bank through these computer and server 17, 18. For example: the RYY listed security purchased by bank customer Y is displayed by means of the connection of said computer and server 17, 18 to computer and server 19, 20 managed by the data processing centre of the stock exchange dealing with all titles or foreign currencies or negotiations by means of these telematic tools.

A server 14 processes these pieces of information by means of a specific protocol able to return and manage as SMS a set of information of the type:
- connections to Internet platforms specific for those titles in which bank customer Y is interested;
- numeric values as result of extrapolations and trends;
- numeric values adapted to provide, in a form complying with the messaging service, feelings related to this specific title RYY.

A further characteristics of an information managing system of the present invention deals with the option that establishes a commercial cooperation between a network 3 and a messaging centre (MSC) 12 for managing and selling packets of messages of the SMS-type. A user of a network comprising an information system based on SMS-type messaging, employs an information system including advertising messages, that can be divided into communication environment (according to the choice performed by the user upon his login into the system, and therefore independently from his geographical, residence or permanence position, or from the position towards which he is moving), according to the mentioned Nation, Province or Municipality, whose implementation occurs due to the automatic execution of a protocol associated with the computer connected to the server 14 that manages the sale of advertising messages; in other words, this protocol manages an advertising database organised into national or local (micro-advertising) environments and combined with the main pieces of information that are the subject of a message.

Summarising, in order to further clarify what has been described above, the above mentioned system is used for managing and transmitting digital information by means of a messaging system: such system is adapted to send a prepared and organised message, as result of the processing of pieces of information collected by different databases according to pre-fixed criteria, and is contained on at least one user computer or at least one server 7, 8, 14 connected through the user computer through a network 3. Each one of the databases managed by the system contains pieces of information and data composing the subject of an exchange of information between subscribers of the network 3.

The system comprises a procedure for selecting specific pieces of information contained in the databases that associates specific addresses to which a message must be sent, and comprises a protocol associated with a computer connected to the 7, 8, 14 that manages the sale of advertising messages.

The protocol is able to be automatically performed in order to divide a coverage area of the network 3 into geographic communication environments selected by at least one user of the networks 3 and independent from the user position, and in order to send, to such user of the network 3, a set of information comprising advertising messages that depend on the geographic communication environments. The set of information is sent to the user if it results, according to residence data provided by the user himself, that the user belongs to such geographic communication environments.

The described system is adapted to manage and translate the pieces of information through a protocol, which is adapted to define command lines, that contain: general user personal network data; and specific pieces of information containing: greetings sentences, addresses of Internet entertainment platforms, data about communication environments divided into Nation, Province or Municipality: such command lines in the end compose the advertising messages.

The digital information managing system of the above-described type can be used in several forms, as can be shown in the description of further communication systems in a non-limiting example of the scope of the invention.

A Publishing, Music or Motion Picture Company, as well as an individual Singer or Music Group, manages an Internet entertainment platform to which individual Artist Fans or Fans Clubs can subscribe. The artistic news regarding the various artists are disclosed through a messaging system of the SMS-type that exploits an added value due to advertising messages enclosed to main messages, or through SMS packets free from advertisements that are sold in pre-paid packets to the entertainment platform manager.

Through a quite similar system, a professional firm, a local body, a public service organisation (Civil Protection), a Church, a religious body, a voluntary structure can use the SMS transmission system to provide a service for their own users, simultaneously promoting a sponsoring system from anyone wishing to help such Operator.

## Claims

1. System for managing and transmitting digital information by means of a messaging service, said system being adapted to send a prepared and organised message, as result of a processing of pieces of information collected from different databases according to pre-fixed criteria, said system being contained on at least one user computer or at least one server (7, 8, 14) connected through said user computer through a network (3), each one of said databases managed by said system containing pieces of information and data composing the subject of an exchange of information between subscribers of the network (3), said system comprising a procedure for selecting specific pieces of information contained in said databases that associates specific addresses to which a message must be sent, **characterised in that** said system comprises a protocol associated with a computer connected to the server (7, 8, 14) that manages the sales of advertising messages, said protocol being able to be automatically performed in order to divide a coverage area of the network (3) into geographic communication environments selected by at least one user of the network (3) and independent from the user position, and in order to send, to said user of the network (3), a set of information comprising advertising messages that depend on said geographic communication environments, said environments being in particular Nation, Province or Municipality of the user, said set of information being sent to said at least one user if it results that, according to residence data provided by said at least one user, said ad least one user belongs to said geographic communication environments.

2. System according to claim 1, **characterised in that** it is adapted to manage and translate said pieces of information through a protocol, said protocol being adapted to define command lines, said command lines containing: general network personal data of said users; and specific pieces of information containing: greetings sentences, addresses of Internet entertainment platforms, data about communication environments divided into Nation, Province or Municipality, said command lines composing said advertising messages.

3. System according to Claim 1, **characterised in that** an operating system residing on said user PC is adapted to keep telephone numbers secret and to filter a reception of undesired messages or, if chosen, leaving the telephone numbers available to external operators.

4. System according to Claim 1, **characterised in that** said user computer and said server (7, 8), through a managing system residing on an external operator server, or through a managing system residing on a user PC, manage a time planning program dealing with the expiry date on which specific information have to be sent by means of a SMS-type messaging system as regards users or subscribers belonging to the network.

5. System according to Claim 1, **characterised in that** it comprises a Messaging Service Centre (MSC) (12) of a SMS-type that is adapted to manage messaging services of the SMS-type according to a time programming, said messaging services of the SMS-type performing a selection that associates specific events like Christmas and Easter to users of a company and the automatic shipment of greetings messages obtained from the combination of said events with general data about said users.

6. System according to Claim 5, **characterised in that** a database (11) containing:
- a set of pieces of information dealing with general bank customers data;
- the list of listed securities associated with respective customers;
- the value of each listed security, said value being included starting from a specific date programmed by means of a computer and a server (17, 18);
is associated with a database managed by a remote system like a computer and a server (19, 20) managed by a data processing centre of a stock exchange; a server (14) processing data by means of a specific protocol, returns and manages as SMS a set of pieces of information to be sent to a specific customer.
